# EUROPÄISCHE PATENTSCHRIFT

(11) **EP 2 025 879 B1**
(45) Veröffentlichungstag und Bekanntmachung des Hinweises auf die Patenterteilung: **13.04.2016**
(21) Anmeldenummer: 08014144.3
(22) Anmeldetag: 07.08.2008
(51) Int. Cl.: F01D 15/00, F01D 11/04, F02C 1/10, F01K 25/08, F16J 15/40

(54) **Turbine für eine ORC-Anlage, ORC-Anlage mit einer derartigen Turbine und Verfahren zum Betreiben einer ORC-Anlage**
Turbine for an ORC plant, ORC plant with such a turbine and method for operating an ORC plant
Turbine d'une centrale d'ORC, centrale d'ORC avec une telle turbine et procédé d'exploitation d'une centrale d'ORC

(30) Priorität: 08.08.2007 DE 102007037311
(43) Veröffentlichungstag der Anmeldung: 18.02.2009
(73) Patentinhaber: GMK-Gesellschaft für Motoren und Kraftanlagen mbH, 18211 Bargeshagen / Rostock (DE)
(72) Erfinder: Piacentini-Timm, Aldo, 18209 Wittenbeck (DE); Niesner, René, 18069 Rostock (DE); Vossberg, Thomas, 18059 Ziesendorf (DE); Drescher, Ulli, 18057 Rostock (DE)
(74) Vertreter: Hagemann, Heinrich

(56) Entgegenhaltungen:
- BE-A- 459 578
- DE-A1- 2 411 243
- DE-A1- 4 041 965
- JP-A- 59 192 803
- US-A- 2 608 380
- US-A- 3 414 274
- US-A- 4 005 580
- US-A- 4 189 156
- US-A1- 2003 159 444

## Beschreibung

Die Erfindung betrifft eine Turbine mit einer Wellendichtung, eine ORC-Anlage mit einer derartigen Turbine sowie ein Verfahren zum Betreiben einer ORC-Anlage.

Aus dem Stand der Technik, beispielsweise aus der DE 43 13 805 A1, sind Wellendichtungen für Dampfturbinen bekannt. Um die Kraft von einer Dampfturbine mit einer Welle an einen Generator zu übertragen, weist das Turbinengehäuse zumindest eine Öffnung als Wellendurchführung auf. Der Antrieb der Turbine erfolgt durch das Einleiten von heißem Dampf in den Turbineninnenraum, wo der Dampf das Turbinenrad in Rotation versetzt. Beim Durchlaufen der Turbine entspannt der Dampf und weist am Ende der Turbine einen Druck unterhalb des Umgebungsdrucks auf, so dass im Bereich der Wellendurchführung Außenluft in den Turbineninnenraum drängt. Bekannte Wellendichtungen dienen dazu, das Eindringen der Außenluft zu verhindern.

DE 43 13 805 AI offenbart dazu eine Wellendichtung, die Dichtmittel umfasst, wobei zwischen jeweils zwei Dichtmitteln eine Sperrkammer, eine Leckagekammer sowie eine Wrasenkammer angeordnet sind. Die Sperrkammer ist mit der Abdampfleitung der Turbine verbunden, so dass entspannter Dampf in die Sperrkammer geleitet und dort als Sperrdampf eingesetzt wird. Die Leckagekammer verfügt über einen Ablauf, so dass der am ersten Dichtmittel vorbei in die Leckagekammer drängende Dampf abgeleitet werden kann. Dabei kann die abgeleitete Dampfmenge durch ein Stellventil reguliert werden, so dass der Druck in der Leckagekammer eingestellt werden kann. Auf diese Weise kann auch die Leckagemenge reguliert werden. Die der Leckagekammer nachgeordnete und durch ein Dichtmittel von der Leckagekammer getrennte Wrasenkammer ist mit einer Absaugvorrichtung verbunden. Die Absaugvorrichtung dient dem Zweck, innerhalb der Wrasenkammer einen Unterdruck aufzubauen, so dass die entlang der Welle eindringende Außenluft nicht bis in den Innenraum der Turbine vordringen kann, sondern aus der Wrasenkammer entfernt wird. Der in der Wrasenkammer herrschende Unterdruck führt auch dazu, dass Dampf von der Leckagekammer in die Wrasenkammer übergeleitet wird. Der übergeleitete Dampf wird zusammen mit der Außenluft aus der Wrasenkammer abgesaugt, wobei bei bekannten Wellendichtungen zwischen der Wrasenkammer und der Absaugvorrichtung ein Wrasenrohr angeordnet ist, das einen Teil des Dampfes an die Umgebung abführt.

Aus dem Stand der Technik sind weitere Wellendichtungen bekannt, die ein flüssiges Dichtmittel aufweisen. Wellendichtungen mit einem flüssigen Dichtmittel zeigen beispielsweise US 4,189,156 A, US 2,608,380 A, BE 459 578 A und US 4,005,580 A. Außerdem sind Wellendichtungen bekannt, die ein gasförmiges Dichtmittel nutzen. Derartige Wellendichtungen sind beispielsweise in US 3,414,274 A und DE 24 11 234 A1 beschrieben.

Turbinen von ORC-Anlagen werden statt mit Wasserdampf mit organischen Fluiden, beispielsweise Silikonölen, betrieben. Die Abgabe von organischen Fluiden an die Umgebung ist dabei nicht erwünscht, da sie in der Regel brennbar sind. Bekannte Wellendichtungen können also nicht ohne weiteres bei Turbinen für ORC-Anlagen verwendet werden.

Der Erfindung liegt daher die Aufgabe zu Grunde, eine Wellendichtung anzugeben, die die Wellendurchführung einer Turbine für eine ORC-Anlage umweltschonend und wirksam abdichtet. Der Erfindung liegt ferner die Aufgabe zugrunde, eine ORC-Anlage mit einer derartigen Wellendichtung sowie ein Verfahren zum Betreiben einer ORC-Anlage anzugeben.

Erfindungsgemäß wird diese Aufgabe im Hinblick auf die Wellendichtung durch den Gegenstand des Patentanspruchs 1, im Hinblick auf die ORC-Anlage durch den Gegenstand des Patentanspruchs 7 und im Hinblick auf das Verfahren durch den Gegenstand des Patentanspruchs 8 gelöst.

Der Erfindung liegt der Gedanke zu Grunde, eine Turbine mit einer Wellendichtung für eine Turbine für eine ORC-Anlage, die ein organisches Arbeitsmittel umfasst, mit wenigstens einer Sperrkammer und wenigstens einem Dichtmittel, anzugeben, wobei die Sperrkammer zumindest einen Zulauf und zumindest einen Ablauf aufweist, wobei der Zulauf mit zumindest einem Vorratsbehälter und der Vorratsbehälter mit einem Kondensator verbunden ist, derart, dass das Arbeitsmittel im flüssigen Zustand vom Kondensator in den Vorratsbehälter und vom Vorratsbehälter in die Sperrkammer geleitet wird, wobei der Vorratsbehälter höher als die Turbine angeordnet ist.

Die Erfindung hat den Vorteil, dass durch das Einleiten des Arbeitsmittels aus dem Kondensator über den Vorratsbehälter in die Sperrkammer das Arbeitsmittel im flüssigen Zustand als Sperrflüssigkeit wirkt. Durch die Verwendung desselben Mittels als Arbeitsmittel und als Sperrflüssigkeit ist eine Trennung der Sperrflüssigkeit vom Arbeitsmitteldampf, der bei Abdampfdrücken über 1 Atmosphäre aus dem Turbineninnenraum in die Sperrkammer dringt und bei Abdampfdrücken unter 1 Atmosphäre aus der Sperrkammer in die Turbine dringt und sich mit der Sperrflüssigkeit vermischt, nicht erforderlich. Bei anderen Sperrflüssigkeiten ist eine Trennung notwendig, was insbesondere in der Turbine nur mit hohem technischem Aufwand möglich wäre. Des Weiteren ist der Vorratsbehälter vorteilhafterweise höher als die Turbine angeordnet, so dass sich ein statischer Druck einstellt, der eine sichere Zufuhr des flüssigen Arbeitsmittels in die Sperrkammer gewährleistet. Auf diese Weise kann auf eine zusätzliche Pumpe zur Sicherstellung der Sperrmittelzufuhr verzichtet werden, wodurch der Gesamtwirkungsgrad der ORC-Anlage verbessert wird. Dadurch, dass das flüssige Arbeitsmittel über einen Zulauf in die Sperrkammer hinein und über einen Ablauf aus der Sperrkammer wieder herausgeleitet wird, entsteht ein kontinuierlicher Fluss des kondensierten Arbeitsmittels, das zudem als Kühlmittel zur Kühlung der Turbinenwelle dient.

Vorteilhafterweise ist die Sperrkammer zwischen zwei Dichtmitteln, insbesondere Kohlendichtringen, angeordnet. Auf diese Weise ist die Sperrkammer in axialer Richtung beidseitig abgetrennt, so dass das flüssige Arbeitsmittel, das als Sperr- und Kühlflüssigkeit dient, weitgehend innerhalb der Sperrkammer verbleibt. Außerdem ermöglicht diese Abtrennung durch die Dichtmittel den Aufbau eines Druckes innerhalb der Sperrkammer, so dass der sperrende Effekt verstärkt wird.

Bei einer bevorzugten Ausführungsform der erfindungsgemäßen Wellendichtung sind die Sperrkammer und das Dichtmittel zwischen der Turbine und einer Absaugkammer mit einer Absaugvorrichtung, insbesondere einer Vakuumpumpe, angeordnet derart, dass das am Dichtmittel vorbei drängende Arbeitsmittel sowie in die Dichtung eindringende Außenluft abgesaugt werden können. Dadurch wird insbesondere das Eindringen von Luft in den Turbineninnenraum verhindert. Des Weiteren werden damit Undichtigkeiten der Dichtmittel, die beispielsweise durch Verschleiß entstehen können, kompensiert.

Vorzugsweise ist am axialen, turbinenfernen Ende der Wellendichtung eine pneumatische Stillstandsdichtung vorgesehen. Die pneumatische Stillstandsdichtung umschließt die Welle beim Stillstand der Turbine, so dass sowohl ein Eindringen von Luft, als auch ein Austreten des Arbeitsmittels aus der Wellendichtung verhindert wird.

Bei einer weiteren bevorzugten Ausführungsform der erfindungsgemäßen Wellendichtung ist der Ablauf der Sperrkammer derart angepasst, dass das Arbeitsmittel zur ORC-Anlage rückführbar ist. Auf diese Weise wird sichergestellt, dass das Arbeitsmittel nicht an die Umgebung abgegeben wird. Die Rückführung und Wiederverwendung des Arbeitsmittels ist besonders umweltschonend.

Bei einer weiteren bevorzugten Ausführungsform der erfindungsgemäßen Wellendichtung ist der Absaugvorrichtung eine Trenneinrichtung nachgeordnet, die das abgesaugte Arbeitsmittel von der abgesaugten Außenluft trennt und die mit der ORC-Anlage verbunden ist derart, dass das Arbeitsmittel zur ORC-Anlage rückführbar ist. Die Rückführung des Arbeitsmittels in die ORC-Anlage ermöglicht einen umweltschonenden Betrieb der ORC-Anlage. Außerdem kann durch die Verwendung des wieder gewonnenen Arbeitsmittels der Arbeitsmittelbedarf reduziert werden.

Der Erfindung liegt ferner der Gedanke zu Grunde, eine ORC-Anlage mit einer Turbinenwellendichtung, die wenigstens eine Sperrkammer und wenigstens ein Dichtmittel umfasst, wobei die Sperrkammer zumindest einen Zulauf und zumindest einen Ablauf aufweist, anzugeben. Dabei ist der Zulauf mit wenigstens einem Vorratsbehälter und der Vorratsbehälter mit einem Kondensator verbunden derart, dass das Arbeitsmittel in flüssigem Zustand vom Kondensator in den Vorratsbehälter und vom Vorratsbehälter in die Sperrkammer geleitet wird, wobei der Vorratsbehälter höher als die Turbine angeordnet ist.

Des Weiteren liegt der Erfindung der Gedanke zugrunde, ein Verfahren zum Betreiben einer ORC-Anlage mit einer Turbine, wobei die ORC-Anlage ein organisches Arbeitsmittel umfasst, anzugeben, wobei das Arbeitsmittel im flüssigen Zustand in wenigstens eine Sperrkammer einer Turbinenwellendichtung als Sperrflüssigkeit eingeleitet und aus der Sperrkammer in die ORC-Anlage zurück geführt wird.

Das Verfahren hat den Vorteil, dass durch die Verwendung des organischen Mittels sowohl als Arbeitsmittel, als auch als Sperrmittel keine Trennung des in die Wellendichtung eindringenden Arbeitsmittels vom Sperrmittel notwendig ist. Außerdem wird die benötigte Arbeitsmittelmenge durch die Rückführung des Sperrmittels in die ORC-Anlage gering gehalten.

Bei einer bevorzugten Ausführungsform des erfindungsgemäßen Verfahrens wird das Arbeitsmittel im flüssigen Zustand von einem Kondensator in einen Vorratsbehälter, der höher als die Turbine angeordnet ist, und vom Vorratsbehälter in die Sperrkammer und aus der Sperrkammer zur ORC-Anlage zurück geleitet. Dadurch kann das Arbeitsmittel zuverlässig der Sperrkammer zugeführt werden, da sich durch die Höhendifferenz zwischen Vorratsbehälter und Turbine ein statischer Druck aufbaut. Des Weiteren besteht die Möglichkeit, dass das Arbeitsmittel aufgrund der Verweildauer im Vorratsbehälter abkühlt, so dass es in der Sperrkammer auch als Kühlflüssigkeit zur Kühlung der Turbinenwelle verwendet werden kann.

Vorzugsweise wird bei einem erfindungsgemäßen Verfahren ein Teil des Arbeitsmittels, das entlang der Turbinenwelle aus der Sperrkammer in eine Absaugkammer strömt, mit in die Absaugkammer eindringender Luft zu einer Trenneinrichtung geführt und in der Trenneinrichtung von der Luft getrennt und der ORC-Anlage zurück geleitet. Dadurch wird eine Abgabe des organischen Arbeitsmittels, das brennbar ist, an die Umgebung verhindert und ein umweltschonender Betrieb ermöglicht.

Die Erfindung wird im Folgenden anhand von Ausführungsbeispielen unter Bezug auf die beigefügten schematischen Zeichnungen näher erläutert. Darin zeigen
Fig. 1 einen Längsschnitt durch eine Wellendichtung nach einem erfindungsgemäßen Ausführungsbeispiel;
Fig. 2 ein Prozessschaltbild einer ORC-Anlage mit einer Turbinenwellendichtung gemäß Fig. 1;
Fig. 3 ein Prozessschaltbild nach einem weiteren Ausführungsbeispiel.

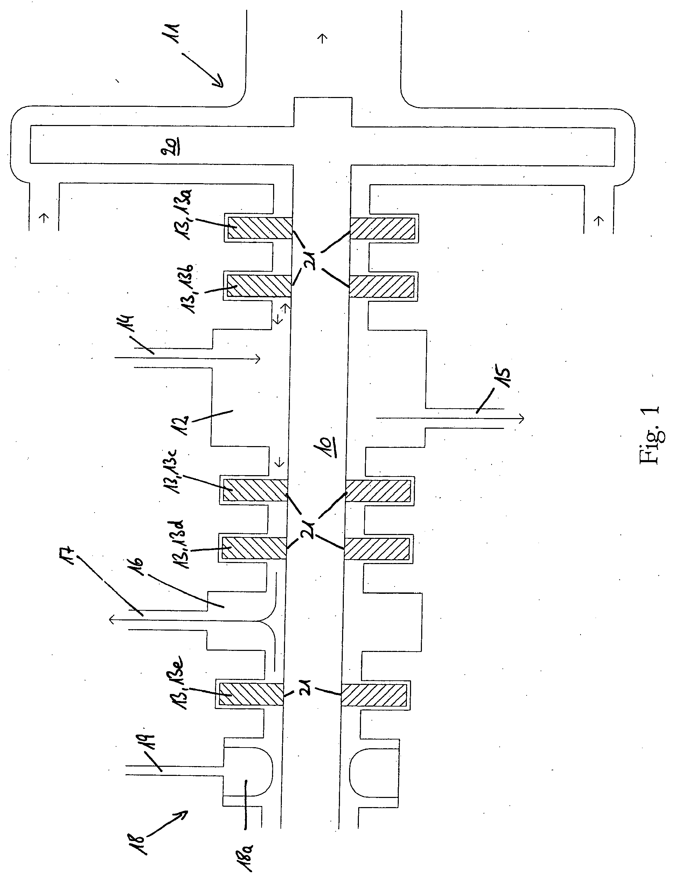

Fig. 1 zeigt eine Wellendichtung für eine Welle 10 einer Turbine 11. Vorzugsweise bildet die Welle 10 eine starre Verbindung zwischen dem Turbinenrad 20 und einem Generator 32. Dazu weist das Turbinengehäuse zumindest eine Öffnung auf, die durch die Wellendichtung abgedichtet ist. Am turbinennahen, axialen Ende der Wellendichtung sind zwei Dichtmittel 13a, 13b angeordnet, die einerseits einen Großteil des unter Druck stehenden, gasförmigen Arbeitsmittels im Turbineninnenraum zurückhalten und andererseits den Druck desjenigen Teils des Arbeitsmittels, der nicht zurückgehalten werden kann, reduzieren. Vorzugsweise umfassen die Dichtmittel 13a, 13b Kohlenringdichtungen. Andere Dichtmittel 13a, 13b sind denkbar. Es ist auch möglich, dass die Dichtmittel 13a, 13b eine Labyrinth-Dichtung aufweisen, da Labyrinth-Dichtungen besonders dazu geeignet sind, den Druck des Arbeitsmittels zu reduzieren. In axialer Richtung zum turbinenfernen Wellenende hin ist den Dichtmitteln 13a, 13b eine Sperrkammer 12 nachgeordnet. Die Sperrkammer 12 verfügt über einen Zulauf 14 für Arbeitsmittel im flüssigen Zustand, das einem Vorratsbehälter 33 entnommen wird, wobei der Vorratsbehälter 33 durch den Kondensator 41 der ORC-Anlage gespeist wird. Ferner weist die Sperrkammer 12 einen Ablauf 15 auf, durch den das Arbeitsmittel zur ORC-Anlage zurückgeführt wird. Innerhalb der Sperrkammer 12 wirkt das flüssige Arbeitsmittel gegenüber dem gasförmigen Arbeitsmittel aus dem Turbineninnenraum als Sperrflüssigkeit. Außerdem dient das flüssige Arbeitsmittel als Kühlflüssigkeit für die Welle 10, die durch Reibung an den Dichtflächen 21 erwärmt wird. Die Sperrkammer 12 ist durch zwei weitere Dichtmittel 13c, 13d von der Absaugkammer 16 getrennt, wobei die Absaugkammer 16 die Welle 10 ringförmig umschließt. In Richtung des turbinenfernen Endes der Wellendichtung ist der Absaugkammer 16 ein weiteres Dichtmittel 13e nachgeordnet. Die Absaugkammer 16 umfasst eine Absaugleitung 17, insbesondere ein Rohr oder einen Schlauch, so dass das an den Dichtmitteln 13c, 13d vorbei drängende Arbeitsmittel sowie die am Dichtmittel 13e vorbei drängende Außenluft abgesaugt werden kann. Vorzugsweise erfolgt der Absaugvorgang mit Hilfe einer Vakuumpumpe, die das Luft-Arbeitsmittelgemisch zu einer Trenneinrichtung 34 führt. In der Trenneinrichtung 34 wird das Arbeitsmittel von der Luft getrennt, so dass das Arbeitsmittel wieder der ORC-Anlage zugeführt und die Luft an die Umgebung abgegeben werden kann. Da das Arbeitsmittel einer ORC-Anlage in der Regel ein organisches Fluid aufweist, kann die Trenneinrichtung 34 beispielsweise Zyklone, Kondensatoren oder Molekularsiebe umfassen. In Fig. 1 ist weiterhin am axialen, turbinenfernen Ende der Wellendichtung eine Stillstandsdichtung 18 dargestellt, die pneumatisch betrieben wird. Dazu umfasst die Stillstandsdichtung 18 einen ringförmigen Balg 18a, der über eine Druckluftleitung 19 mit Druckluft beaufschlagt werden kann, so dass der Balg 18a die Welle 10 fest umschließt und den Turbineninnenraum somit gegenüber der Umgebung abdichtet.

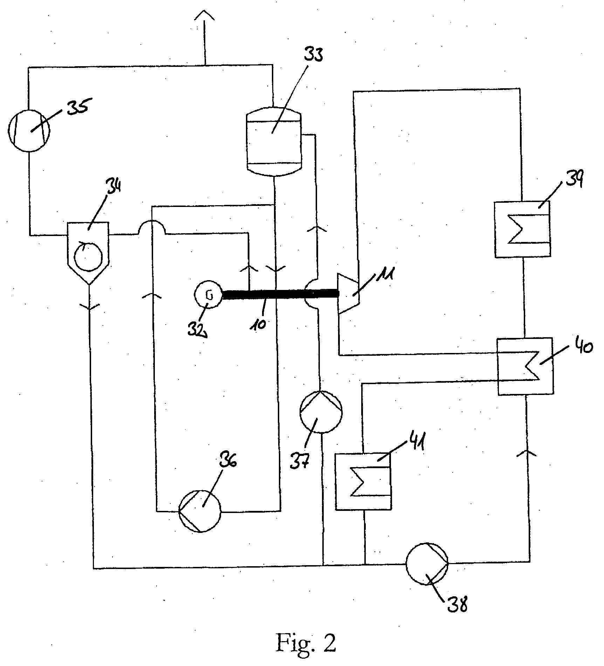

Fig. 2 zeigt ein Prozessschaltbild eines erfindungsgemäßen Ausführungsbeispiels, wobei die Welle 10 die Turbine 11 mit einem Generator 32 verbindet. Das Arbeitsmittel durchläuft im gasförmigen Zustand die Turbine 11 und treibt diese an. Das entspannte Arbeitsmittel wird mit Hilfe der Pumpe 38 des Arbeitskreislaufs durch den Arbeitskreislauf der ORC-Anlage gepumpt und gelangt im weiteren Verlauf in den Rekuperator 40. Vom Rekuperator 40 wird das Arbeitsmittel in den Kondensator 41 geleitet, wo es vom gasförmigen in den flüssigen Zustand überführt wird. Der Hauptstrom des flüssigen Arbeitsmittels wird über die Pumpe 38 wiederum zum Rekuperator 40 geleitet. Dort wird das Arbeitsmittel durch den Wärmeaustausch zwischen dem entspannten Arbeitsmittel aus der Turbine 11 und dem kondensierten Arbeitsmittel erwärmt. Im Dampferzeuger 39 wird das Arbeitsmittel wieder in den gasförmigen Zustand überführt und der Turbine 11 zugeleitet. Ein Teilstrom des flüssigen Arbeitsmittels wird nach dem Durchgang durch den Kondensator 41 dem Dichtungskreislauf zugeführt. Dazu wird das Arbeitsmittel durch die zum Vorratsbehälter 33 hin fördernde Pumpe 37 in den Vorratsbehälter 33 gepumpt. Im Vorratsbehälter 33 kühlt das kondensierte Arbeitsmittel weiter ab. Üblicherweise beträgt die Temperatur des kondensierten Arbeitsmittels etwa 80 bis 100°C. Durch die Verweildauer des Arbeitsmittels im Vorratsbehälter 33 kann die Temperatur des Arbeitsmittels auf Umgebungstemperatur gesenkt werden. Daher kann das Arbeitsmittel auch als Kühlflüssigkeit für die Welle 10 eingesetzt werden. Durch die Pumpe 36 im Dichtungskreislauf wird sichergestellt, dass das flüssige Arbeitsmittel aus dem Vorratsbehälter 33 über den Zulauf 14 durch die Sperrkammer 12 geleitet wird. Das Arbeitsmittel verlässt die Sperrkammer 12 durch den Ablauf 15 und durchläuft die Pumpe 36, die das Arbeitsmittel wieder zum Zulauf 14 befördert. Durch Stellventile (nicht dargestellt) im Zulauf 14 und im Ablauf 15 kann der Druck innerhalb der Sperrkammer 12 eingestellt werden.

Fig. 2 zeigt weiterhin, dass die Absaugleitung 17 mit einer Trennvorrichtung 34 verbunden ist. Die Trennvorrichtung 34 trennt die beiden Anteile des abgesaugten Luft-Arbeitsmittelgemisches in einen Luftstrom und einen Arbeitsmittelstrom auf. Der Arbeitsmittelstrom wird sowohl dem Vorratsbehälter 33 über die Pumpe 37, als auch dem Arbeitskreislauf über die Pumpe 38 zugeführt. Der Luftstrom wird im Verdichter 35 komprimiert und zusammen mit der Entlüftung des Vorratsbehälters 33 an die Umgebung abgegeben.

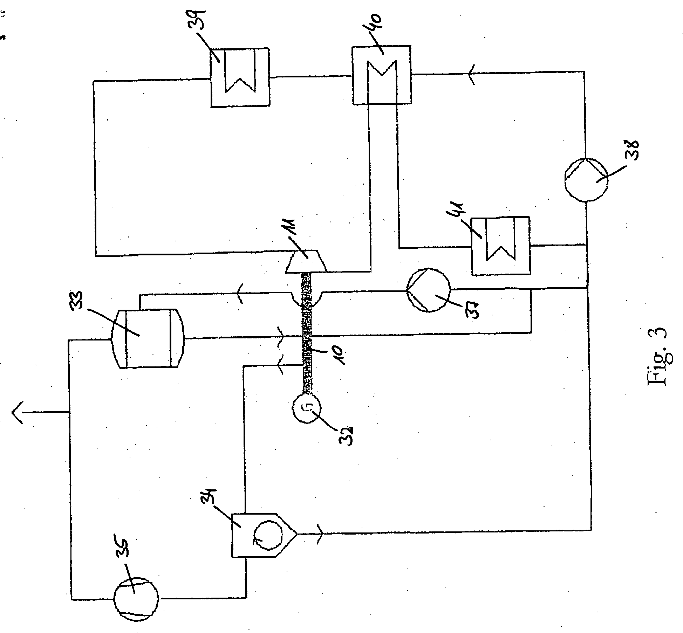

Fig. 3 zeigt ein Ausführungsbeispiel der erfindungsgemäßen Wellendichtung analog zu Fig. 2, wobei der Ablauf 15 der Sperrkammer 12 sowohl mit dem Dichtungskreislauf, als auch mit dem Arbeitskreislauf verbunden ist, so dass ein Teilstrom des Arbeitsmittels aus der Sperrkammer 12 wieder über die Pumpe 37 dem Vorratsbehälter 33 zugeführt wird. Ein weiterer Teilstrom gelangt über die Pumpe 38 des Arbeitskreislaufs in den Rekuperator 40 des Arbeitskreislaufes. Auf diese Weise kann auf die Pumpe 36 des Dichtungskreislaufs aus Fig. 2 verzichtet werden, wodurch die Wellendichtung besonders umweltschonend betrieben werden kann.

### Bezugszeichenliste

- 10: Welle
- 11: Turbine
- 12: Sperrkammer
- 13: Dichtmittel
- 13a: erstes Dichtmittel
- 13b: zweites Dichtmittel
- 13c: drittes Dichtmittel
- 13d: viertes Dichtmittel
- 13e: fünftes Dichtmittel
- 14: Zulauf
- 15: Ablauf
- 16: Absaugkammer
- 17: Saugleitung
- 18: Stillstandsdichtung
- 18a: Balg
- 19: Druckluftleitung
- 20: Turbinenrad
- 21: Dichtfläche
- 32: Generator
- 33: Vorratsbehälter
- 34: Trenneinrichtung
- 35: Verdichter
- 36: Pumpe im Dichtungskreislauf
- 37: Pumpe zum Vorratsbehälter
- 38: Pumpe im Arbeitskreislauf
- 39: Dampferzeuger
- 40: Rekuperator
- 41: Kondensator

## Patentansprüche

1. Turbine (11) für eine ORC-Anlage, die ein organisches Arbeitsmittel umfasst, mit zumindest einem Vorratsbehälter (33) und einer Wellendichtung, die wenigstens eine Sperrkammer (12) und wenigstens ein Dichtmittel (13) aufweist, wobei die Sperrkammer (12) zumindest einen Zulauf (14) aufweist, der mit dem Vorratsbehälter (33) verbunden ist, **dadurch gekennzeichnet, dass** die Sperrkammer (12) zumindest einen Ablauf (15) aufweist und der Vorratsbehälter (33) mit einem Kondensator (41) derart verbunden ist, dass das Arbeitsmittel im flüssigen Zustand vom Kondensator (41) in den Vorratsbehälter (33) und vom Vorratsbehälter (33) in die Sperrkammer (12) geleitet wird, wobei der Vorratsbehälter (33) höher als die Turbine (11) angeordnet ist.

2. Turbine (11) nach Anspruch 1,
**dadurch gekennzeichnet, dass**
die Sperrkammer (12) zwischen zwei Dichtmitteln (13b, 13c), insbesondere Kohlendichtringen, angeordnet ist.

3. Turbine (11) nach einem der Ansprüche 1 oder 2,
**dadurch gekennzeichnet, dass**
die Sperrkammer (12) und das Dichtmittel (13a, 13b, 13c, 13d) zwischen der Turbine (11) und einer Absaugkammer (16) mit einer Absaugvorrichtung, insbesondere einer Vakuumpumpe, angeordnet sind derart, dass das am Dichtmittel (13) vorbei drängende Arbeitsmittel sowie in die Dichtung eindringende Außenluft abgesaugt werden können.

4. Turbine (11) nach wenigstens einem der Ansprüche 1 bis 3,
**dadurch gekennzeichnet, dass**
am axialen, turbinenfernen Ende der Wellendichtung eine pneumatische Stillstandsdichtung (18) vorgesehen ist.

5. Turbine (11) nach wenigstens einem der Ansprüche 1 bis 4,
**dadurch gekennzeichnet, dass**
der Ablauf (15) der Sperrkammer (12) derart angepasst ist, dass das Arbeitsmittel zur ORC-Anlage rückführbar ist.

6. Turbine (11) nach wenigstens einem der Ansprüche 3 bis 5,
**dadurch gekennzeichnet, dass**
der Absaugvorrichtung eine Trenneinrichtung (34) nachgeordnet ist, die das abgesaugte Arbeitsmittel von der abgesaugten Außenluft trennt und die mit der ORC-Anlage verbunden ist derart, dass das Arbeitsmittel zur ORC-Anlage rückführbar ist.

7. ORC-Anlage mit einer Turbine (11) nach einem der vorangegangenen Ansprüche.

8. Verfahren zum Betreiben einer ORC-Anlage mit einer Turbine (11) nach einem der Ansprüche 1 bis 6, wobei die ORC-Anlage ein organisches Arbeitsmittel umfasst, das im flüssigen Zustand in wenigstens eine Sperrkammer (12) der Turbinenwellendichtung als Sperrflüssigkeit eingeleitet und aus der Sperrkammer (12) in die ORC-Anlage zurück geführt wird.

9. Verfahren nach Anspruch 8, wobei ein Teil des Arbeitsmittels entlang einer Turbinenwelle (10) aus der Sperrkammer (12) in eine Absaugkammer (16) strömt, mit in die Absaugkammer (16) eindringender Luft zu einer Trenneinrichtung (34) geführt, in der Trenneinrichtung (34) von der Luft getrennt und der ORC-Anlage zurück geleitet wird.

## Claims

1. A turbine (11) for an ORC plant, which includes an organic working medium, with at least one storage tank (33) and a shaft seal, which includes at least one barrier chamber (12) and at least one sealing means (13), wherein the barrier chamber (12) has at least one inlet (14), which is connected to the storage tank (33), **characterised in that** the barrier chamber (12) has at least one outlet (15) and the storage tank (33) is connected to a condenser (41) such that the working medium is conducted in the liquid state from the condenser (41) into the storage tank (33) and from the storage tank (33) into the blocking chamber (12), wherein the storage tank (33) is arranged higher than the turbine (11).

2. A turbine (11) as claimed in Claim 1, **characterised in that** the barrier chamber (12) is arranged between two seals means (13b, 13c), particularly carbon sealing rings.

3. A turbine (11) as claimed in one of Claims 1 or 2, **characterised in that** the barrier chamber (12) and the sealing means (13a, 13b, 13c, 13d) are arranged between the turbine (11) and a suction chamber (16) with a suction device, particularly a vacuum pump, such that working medium forcing its way past the sealing means (13) and atmospheric air penetrating into the seal can be drawn off.

4. A turbine (11) as claimed in one of Claims 1 to 3, **characterised in that** a pneumatic standstill seal (18) is provided at the axial end remote from the turbine of the shaft seal.

5. A turbine (11) as claimed in one of Claims 1 to 4, **characterised in that** the outlet (15) from the barrier chamber (12) is adapted such that the working medium may be returned to the ORC plant.

6. A turbine (11) as claimed in one of Claims 3 to 5, **characterised in that** the suction device is arranged downstream of a separating device (34), which separates the drawn off working medium from the drawn off atmospheric air and which is connected to the ORC plant so that the working medium may be returned to the ORC plant.

7. An ORC plant including a turbine (11) as claimed in one of the preceding claims.

8. A method of operating an ORC plant with a turbine (11) as claimed in one of Claims 1 to 6, wherein the ORC plant includes an organic working medium, which is introduced in the liquid state into at least one barrier chamber (12) of the turbine shaft seal as a barrier liquid and is conducted out of the barrier chamber (12) back into the ORC plant.

9. A method as claimed in Claim 8, wherein a proportion of the working medium flows along a turbine shaft (10) out of the barrier chamber (12) into a suction chamber (16), is conducted with air penetrating into the suction chamber (16) to a separating device (34), is separated from the air in the separating device (34) and is conducted back to the ORC plant.

## Revendications

1. Turbine (11) pour une centrale ORC contenant un milieu de travail organique, avec au moins un réservoir (33) et une garniture d'étanchéité pour arbre, laquelle comprend au moins une chambre de retenue (12) et au moins un joint (13), la chambre de retenue (12) présentant au moins une entrée (14) reliée au réservoir (33), **caractérisée en ce que** la chambre de retenue (12) présente au moins une sortie (15) et **en ce que** le réservoir (33) est relié à un condensateur (41), de manière à conduire le milieu de travail à l'état liquide du condensateur (41) au réservoir (33) et du réservoir (33) à la chambre de retenue (12), le réservoir (33) étant situé plus haut que la turbine (11).

2. Turbine (11) selon la revendication 1, **caractérisée en ce que** la chambre de retenue (12) est disposée entre deux joints (13b, 13c), en particulier des bagues d'étanchéité en carbone.

3. Turbine (11) selon la revendication 1 ou 2, **caractérisée en ce que** la chambre de retenue (12) et le joint (13a, 13b, 13c, 13d) sont disposés entre la turbine (11) et une chambre d'aspiration (16) avec un dispositif d'aspiration, en particulier une pompe à vide, de manière à permettre l'aspiration du milieu de travail refoulé contre le joint (13) et de l'air extérieur pénétrant dans le joint.

4. Turbine (11) selon au moins une des revendications 1 à 3,
**caractérisée en ce qu'**un joint d'étanchéité pneumatique à l'arrêt (18) est prévu à l'extrémité axiale distante de la turbine de la garniture d'étanchéité pour arbre.

5. Turbine (11) selon au moins une des revendications 1 à 4,
**caractérisée en ce que** la sortie (15) de la chambre de retenue (12) est ajustée pour que le milieu de travail puisse être reconduit vers la centrale ORC.

6. Turbine (11) selon au moins une des revendications 3 à 5,
**caractérisée en ce qu'**un dispositif de séparation (34) est situé en aval du dispositif d'aspiration, lequel sépare le milieu de travail aspiré de l'air extérieur aspiré et est relié à la centrale ORC de manière à permettre la recirculation du milieu de travail vers la centrale ORC.

7. Centrale ORC avec une turbine (11) selon l'une des revendications précédentes.

8. Procédé d'exploitation d'une centrale ORC avec une turbine (11) selon l'une des revendications 1 à 6, la centrale ORC contenant un milieu de travail organique, lequel est conduit à l'état liquide vers au moins une chambre de retenue (12) de la garniture d'étanchéité pour arbre de turbine en tant que liquide de retenue, et est reconduit de la chambre de retenue (12) vers la centrale ORC.

9. Procédé selon la revendication 8, dans lequel une fraction du milieu de travail s'écoule le long d'un arbre de turbine (10) de la chambre de retenue (12) vers la chambre d'aspiration (16), est conduite avec l'air pénétrant dans la chambre d'aspiration (16) vers un dispositif de séparation (34), est séparée de l'air dans le dispositif de séparation (34) et est reconduite vers la centrale ORC.
